# EUROPÄISCHE PATENTSCHRIFT

(11) **EP 2 353 915 B1**
(45) Veröffentlichungstag und Bekanntmachung des Hinweises auf die Patenterteilung: **29.02.2012**
(21) Anmeldenummer: 10000922.4
(22) Anmeldetag: 29.01.2010
(51) Int. Cl.: B60K 15/04, F16L 37/42

(54) **Kupplungszwischenstück zur Kupplung eines Zapfventils für Flüssiggas an den Tankstutzen eines Tanks für Flüssiggas**
Coupling connector for coupling a fuel nozzle for liquid gas to the refuelling points of a liquid gas tank
Pièce intercalaire de couplage destinée au couplage d'un pistolet de remplissage pour gaz liquide sur les manchons de citerne d'un réservoir pour gaz liquide

(43) Veröffentlichungstag der Anmeldung: 10.08.2011
(73) Patentinhaber: Elaflex Hiby Tanktechnik GmbH & Co., 22525 Hamburg (DE)
(72) Erfinder: Meyer, Heinz-Ulrich, 22589 Hamburg (DE); Aehle, Achim, 22880 Wedel (DE)
(74) Vertreter: Rohmann, Michael

(56) Entgegenhaltungen:
- EP-A1- 0 039 977
- EP-A1- 1 236 678
- EP-A1- 1 346 946
- EP-A2- 1 669 663
- WO-A1-01/35015
- US-A- 5 285 830

## Beschreibung

Die Erfindung betrifft ein Kupplungszwischenstück zur Kupplung eines Zapfventils für Flüssiggas an den Tankstutzen eines Tanks für Flüssiggas, insbesondere eines Tanks eines Fahrzeugs bzw. Kraftfahrzeugs. - Flüssiggas meint insbesondere Propan, Butan und deren Gemische. Zur Betankung derartiger Tanks für Flüssiggas werden in der Regel manuell zu betätigende Zapfventile eingesetzt, die flüssigkeits- und gasdicht mit dem Tankstutzen verbunden werden. Für die Ausbildung des Zapfventils einerseits und des Tankstutzens andererseits gibt es unterschiedliche Standardausführungen, die untereinander nicht kompatibel sind. In Europa gibt es beispielsweise drei unterschiedliche, untereinander nicht kompatible Standardausführungen, nämlich das ACME 1 %" Schraubgewinde, die italienische Klauenkupplung DISH und die Bajonettkupplung. Als vierte Kupplungsart zwischen Zapfventil und Tankstutzen wird eine gemäß EN 13760 genormte Euro-Steckverbindung eingeführt, die ebenfalls mit den drei vorstehend genannten Kupplungsarten bzw. Schnittstellen nicht kompatibel ist.

Aufgrund der mangelnden Kompatibilität der unterschiedlichen Kupplungsarten bzw. Schnittstellen gibt es bereits Adapter bzw. Kupplungszwischenstücke zur Kupplung eines Zapfventils, das für eine bestimmte Kupplungsart vorgesehen ist, mit einem Tankstutzen, der für eine andere davon abweichende Kupplungsart vorgesehen ist. Derartige Adapter bzw. Kupplungszwischenstücke werden normalerweise von Fahrzeugführem mitgeführt, um das Fahrzeug auch mit Zapfventilen unterschiedlicher Kupplungsarten mit Flüssiggas betanken zu können. Dies ist insbesondere bei Fahrten im Ausland ratsam. Für diese Adapter bzw. Kupplungszwischenstücke ist keine Standardnorm vorgesehen und deshalb gibt es eine Vielzahl von unterschiedlichen Adaptern. Darunter sind auch viele qualitativ und funktionstechnisch minderwertige Adapter bzw. Kupplungszwischenstücke. Bei diesen bekannten Kupplungszwischenstücken ist eine Fehlbedienung nicht ausgeschlossen. So kann beispielsweise ein nicht an einen Tankstutzen angeschlossenes Kupplungszwischenstück auf das Zapfventil aufgesetzt werden und danach kann das Zapfventil voll geöffnet werden, so dass Flüssiggas unkontrolliert in die Atmosphäre entweichen kann.

Demgegenüber liegt der Erfindung das technische Problem zugrunde ein Kupplungszwischenstück der eingangs genannten Art anzugeben, mit dem die vorgenannten Nachteile vermieden werden können und mit dem insbesondere Fehlbedienungen ausgeschlossen sind.

Zur Lösung dieses technischen Problems lehrt die Erfindung ein Kupplungszwischenstück zur Kupplung eines Zapfventils für Flüssiggas an den Tankstutzen eines Tanks für Flüssiggas, insbesondere eines Tanks eines Fahrzeugs bzw. Kraftfahrzeugs, wobei das Kupplungszwischenstück ein Tankstutzenkupplungsende und ein Zapfventilkupplungsende aufweist,
wobei ein Arretierelement zur Arretierung des Tankstutzenkupplungsendes an dem Tankstutzen vorgesehen ist und wobei das Arretierelement von einer Freigabeposition in eine Arretierposition überführbar ist und umgekehrt, wobei nur bzw. ausschließlich bei in der Arretierposition befindlichem Arretierelement das Zapfventil an das Zapfventilkupplungsende funktionsfähig anschließbar ist,
wobei ein in dem Kupplungszwischenstück verschiebbares Widerlagerelement vorgesehen ist und wobei bei Anlage bzw. beim Andrücken des Widerlagerelementes an einem Widerlager des Tankstutzens die Flüssigkeitsausgabe aus einem am Zapfventilkupplungsende angeschlossenen Zapfventil freigebbar ist. Es liegt im Rahmen der Erfindung, dass das Widerlagerelement in Längsrichtung des Kupplungszwischenstückes verschiebbar ist.

Es liegt fernerhin im Rahmen der Erfindung, dass das Widerlagerelement bei Anschluss eines Zapfventils an das Zapfventilkupplungsende und bei an dem Tankstutzen arretiertem Tankstutzenkupplungsende gegen das Widerlager des Tankstutzens andrückbar ist, so dass eine Flüssiggasausgabe aus dem Zapfventil erfolgen kann.

Ein erfindungsgemäßes Kupplungszwischenstück dient zur Kupplung eines Zapfventils mit einem Tankstutzen, wobei das Zapfventil für eine erste Kupplungsart vorgesehen ist und der Tankstutzen für eine zweite, von der ersten unterschiedlichen Kupplungsart vorgesehen ist Das Kupplungszwischenstück funktioniert also gleichsam als Adapter zwischen zwei unterschiedlichen Schnittstellen von Zapfventils und Tankstutzen.

Ein dem erfindungsgemäßen Kupplungszwischenstück zugeordnetes Zapfventil weist in an sich üblicher Weise ein Zapfrohr zum Anschluss an das Kupplungszwischenstück sowie einen Betätigungsgriff für die manuelle Freigabe der Flüssiggasausgabe auf. Empfohlenermaßen ist das Zapfventil bzw. das Zapfrohr mit einem Kontaktelement ausgestattet, das eine Flüssiggasausgabe aus dem Zapfrohr bzw. die manuelle Freigabe der Flüssiggasausgabe nur dann zulässt, wenn sich das Kontaktelement an einem festen Widerlager abstützen kann.

Vorzugsweise ist das erfindungsgemäße Kupplungszväschenstück aus in Längsrichtung hintereinander angeordneten zylinderförmigen Abschnitten bzw. im Wesentlichen zylinderförmigen Abschnitten aufgebaut. Zylinderförmig meint hier insbesondere, dass eine exakte Zylinderform nicht eingehalten werden muss, sondern dass Stege oder dergleichen Erhebungen aus der Zylinderoberfläche und Ausnehmungen in der Zylinderoberfläche zugelassen sind. Nach einer empfohlenen Ausführungsform ist das Tankstutzenkupplungsende des Kupplungszwischenelementes zylinderförmig ausgebildet und zwar für das Einfassen in einen vorzugsweise zylinderförmigen Anschlussflansch des Tankstutzens. - Es liegt im Rahmen der Erfindung, dass das Zapfventilkupplungsende des Kupplungszwischenstückes zylinderförmig ausgebildet ist und zwar insbesondere für das Aufschieben eines zylinderförmigen Zapfrohres bzw. für das Einfassen in ein zylinderförmiges Zapfrohr des Zapfventils.

Eine besonders bevorzugte Ausführungsvariante der Erfindung ist dadurch gekennzeichnet, dass das Arretierelement eine an dem Tankstutzenkupplungsende angeordnete Arretiemase aufweist, welche Arretiernase im arretierten Zustand des Kupplungszwischenstückes bzw. in der Arretierposition des Arretierelementes einen Vorsprung des Tankstutzens hintergreift. Bei dem Vorsprung handelt es sich vorzugsweise um einen über die Zylinderinnenfläche des zylinderförmigen Anschlussflansches des Tankstutzens umlaufenden Bund. Es liegt im Rahmen der Erfindung, dass die Arretiemase in der Arretierposition aus der Oberfläche bzw. aus der zylinderförmigen Oberfläche des Tankstutzenkupplungsendes herausragt Zweckmäßigerweise ist die Arretiernase in der Arretierposition und bevorzugt auch in der Freigabeposition senkrecht bzw. im Wesentlichen senkrecht zu der Längsachse des erfindungsgemäßen Kupplungszwischenstückes ausgerichtet.

Wie bereits oben dargelegt ist das Zapfventilkupplungsende vorzugsweise zylinderförmig bzw. im Wesentlichen zylinderförmig ausgebildet und zwar insbesondere zum Aufschieben eines zylinderförmigen Zapfrohres eines Zapfventils. Nach bevorzugter Ausführungsform der Erfindung weist das Arretierelement einen Arretierzapfen auf, und dieser Arretierzapfen ist in der Arretierposition mit der Maßgabe angeordnet, dass ein Anschluss des Zapfventils bzw. des Zapfrohres an das Zapfventilkupplungsende möglich ist. Vorzugsweise ist der Arretierzapfen in einer Arretierausnehmung des Zapfventilkupplungsendes aufgenommen und in der Arretierposition steht dieser Arretierzapfen nicht nach außen aus der Arretierausnehmung vor, so dass das Zapfventil bzw. das Zapfrohr des Zapfventils auf das Zapfventilkupplungsende aufschiebbar ist. Empfohlenermaßen bildet der Arretierzapfen in der Freigabeposition des Arretierelementes einen Anschlag, der das Anschließen des Zapfventils bzw. des Zapfrohres an das Zapfventilkupplungsende blockiert bzw. verhindert. Gemäß besonders bevorzugter Ausführungsform bildet der Arretierzapfen in der Freigabeposition des Arretierelementes einen aus der Oberfläche des Zapiventilkupptungsendes bzw. aus der Arretierausnehmung hervorstehenden Anschlag, der das Aufschieben bzw. das weitere Aufschieben des Zapfrohres auf das Zapfventilkupplungsende blockiert bzw. verhindert. Es empfiehlt sich, dass der in der Freigabeposition den Anschlag bildende Arretierzapfen das vollständige Aufschieben des Zapfrohres verhindert, das für eine Funktionsfähigkeit bzw. für eine Flüssiggasausgabe erforderlich wäre. Es liegt somit im Rahmen der Erfindung, dass in der Arretierposition des Arretierelementes der Anschluss des Zapfrohres an das Zapfventilkupplungsende möglich ist, während in der Freigabeposition des Arretierelementes der Anschluss bzw. der funktionsfähige Anschluss des Zapfrohres an das Zapfventilkupplungsende blockiert wird.

Eine bewährte Ausführungsform der Erfindung ist dadurch gekennzeichnet, dass das Arretierelement von der Arretierposition in die Freigabeposition sowie von der Freigabeposition in die Arretierposition um die Längsachse L des Kupplungszwischenstückes schwenkbar ist. Es liegt im Rahmen der Erfindung, dass das Arretierelement mit angeschlossener Arretiernase und angeschlossenem Arretierzapfen um die Längsachse L des Kupptungszwischenstückes verschwenkt werden kann. Zweckmäßigerweise ist für diese Verschwenkung des Arretierelementes ein am Arretierelement angeschlossener Hebel vorgesehen und vorzugsweise ist dieser Hebel senkrecht bzw. im Wesentlichen senkrecht zur Längsachse L des Kupplungszwischenstückes angeordnet. Empfohlenermaßen ragt in der Arretierposition die Arretiemase radial aus der Oberfläche des Tankstutzenkupplungsendes hervor und der Arretierzapfen ist vollständig in der Arretierausnehmung des Zapfventilkupplungsendes aufgenommen, so dass er nicht aus der Oberfläche des Zapfventilkupptungsendes vorsteht. Dagegen ragt in der Freigabeposition der Arretierzapfen aus der Arretierausnehmung bzw. aus der Oberfläche des Zapfventilkupplungsendes hervor und die Arretiemase befindet sich in einem eingeschwenkten Zustand, in dem sie nicht aus der Oberfläche des Tankstutzenkupplungsendes hervorragt Es liegt im Rahmen der Erfindung, dass das Arretierelement in der Arretierposition bei vollständig auf das Zapfventilkupplungsende aufgeschobenem Zapfventil nicht in die Freigabeposition überführbar bzw. verschwenkbar ist. Dann verhindert das auf das Zapfventilkupplungsende aufgeschobene Zapfrohr, dass der Arretierzapfen aus der Arretierausnehmung in die Freigabeposition gelangen kann.

Gemäß besonders bevorzugter Ausführungsform der Erfindung ist das Widerlagerelement als sich in Längsrichtung des Kupplungszwischenstückes erstreckender Widertagerkolben ausgebildet und das tankstutzenseitige Ende des Widerlagerkoibens ist an das Widerlager des Tankstutzens andrückbar. Wie weiter unten noch erläutert, stützt sich beim Anlegen bzw. Andrücken des Widerlagerkolbens an das Widerlager des Tankstutzens das Kontaktelement des Zapfventils über den Widerlagerkolben an dem Widerlager des Tankstutzens ab, so dass eine Flüssiggasausgabe erfolgen kann.

Es liegt im Rahmen der Erfindung, dass das Wideriagerelement bzw. der Widerlagerkolben zumindest einen Hohlkanal aufweist, durch den Flüssiggas vom Zapfventilkupplungsende zum Tankstutzenkupplungsende bzw. zum angeschlossenen Tankstutzen strömen kann. Vorzugsweise ist lediglich ein Hohlkanal in dem Widerlagerelement bzw. in dem Widerlagerkolben vorgesehen. Zweckmäßigerweise verläuft der zumindest eine Hohlkanal parallel zur Längsachse L des Kupplungszwischenstückes. Es empfiehlt sich, dass der Hohlkanal zentralmittig im Widerlagerkolben bzw. im vorzugsweise zylinderförmigen Widerlagerkolben angeordnet ist.

Es liegt weiterhin im Rahmen der Erfindung, dass der Wideriagerkolben bezüglich der Längsachse L des Kupplungszwischenstückes länger ist als das Kupplungszwischenstück bzw. länger ist als eine im Kupplungszwischenstück vorgesehene, sich in Längsrichtung erstreckende Kolbenaufnahme für den Widerlagerkolben. Der Widertagerkolben kann also bei entsprechender axialer Verschiebung in der Kolbenaufnahme sowohl mit einem zapfventilseitigen Ende aus dem Zapfventilkupplungsende als auch mit einem tankstutzenseitigen Ende aus dem Tankstutzenkupplungsende vorstehen. Zweckmäßigerweise wird das zapfventilseitige Ende des Widerlagerkolbens beim Anschließen des Zapfventils beaufschlagt und durch diese Beaufschlagung des zapfventilseitigen Endes durch das Zapfventil wird das tankstutzenseitige Ende des Wideriagerkolbens gegen das Widerlager des Tankstutzens gedrückt. Zweckmäßigerweise beaufschlagt beim Anschluss des Zapfventils zumindest ein Kontaktelement im Zapfventil bzw. im Zapfrohr den Widerlagerkolben bzw. das vorstehende zapfventilseitige Ende des Widerlagerkolbens. Solange das tankstutzenseitige Ende des Widerlagerkolbens auf kein Widerlager trifft bzw. sich nicht am Widerlager des Tankstutzens abstützen kann, ist eine Flüssiggasausgabe nicht möglich. Wenn aber das tankstutzenseitige Ende des Widerlagerkolbens auf ein Widerlager trifft bzw. auf das Widerlager des Tankstutzens trifft, kann sich das Kontaktelement des Zapfventils über den Widerlagerkolben an diesem Widerlager abstützen und dann ist eine Flüssiggasausgabe mittels des Betätigungsgriffes des Zapfventils möglich. Vorzugsweise liegt das Kontaktelement des Zapfventils bzw. des Zapfrohres in diesem Zustand unmittelbar an dem zapfventilseitigen Ende des Widerlagerkolbens an.

Empfohlenermaßen ist am tankstutrenseitigen Ende des Widerlagerkolbens zumindest ein Dichtungselement angeordnet, das in dem am Tankstutzen arretierten Zustand des Kupplungszwischenstückes zur Anlage an dem Widerlager des Tankstutzens vorgesehen ist. Zweckmäßigerweise umgibt das Dichtungselement das tankstutzenseitige Ende des Hohlkanals des Widerlagerkolbens. Auf diese Weise ist eine gas- und flüssigkeftsdichte Verbindung zwischen Widerlagerkolben und Tankstutzen beim Einströmen des Flüssiggases möglich.

Es liegt im Rahmen der Erfindung, dass an dem Tankstutzenkupplungsende des erfindungsgemäßen Kupplungszwischenstückes zumindest ein Fixierungselement angeordnet ist und dass das Kupplungszwischenstück mit diesem zumindest einen Fixierungselement und mit dem Arretierelement bzw. mit der Arretiernase an dem Tankstutzen fixierbar und arretierbar ist. Zweckmäßigerweise ist das zumindest eine Fixierungselement mit der Maßgabe ausgebildet, dass es wie die Arretiernase im am Tankstutzen arretierten Zustand des Kupplungszwischenstückes einen Vorsprung bzw. einen Bund am Tankstutzen hintergreift. Bevorzugt sind zwei Fixierungselemente vorgesehen. Dann wird das Tankstutzenkupplungsende mit einem Arretierelement und mit zwei Fixierelementen an dem Tankstutzen fixiert bzw. arretiert.

Der Erfindung liegt zunächst die Erkenntnis zugrunde, dass mit dem erfindungsgemäßen Kupplungszwischenstück eine sehr funktionssichere und dichte Verbindung zwischen Zapfventil und Tankstutzen realisiert werden kann. Der Erfindung liegt vor allem die Erkenntnis zugrunde, dass bei dem erfindungsgemäßen Kupplungszwischenstück Fehlbedienungen praktisch ausgeschlossen sind. Im Gegensatz zu vielen aus dem Stand der Technik bekannten Kupplungszwischenstücken ist ein Öffnen des Zapfventils bzw. ein Herausströmen von Flüssiggas aus dem Zapfventil nur möglich, wenn zugleich das Tankstutzenkupplungsende des Kupplungszwischenstückes bereits am Tankstutzen fest arretiert ist. Insoweit zeichnet sich die Erfindung durch ein hohes Sicherheitsniveau aus. Hervorzuheben ist weiterhin, dass die erfindungsgemäßen Vorteile mit relativ einfachen und wenig aufwendigen Maßnahmen erreicht werden können. Das erfindungsgemäße Kupplungszwischenstück zeichnet sich durch einen wenig komplexen Aufbau sowie durch eine kostengünstige Herstellung aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines erfindungsgemäßen Kupplungs- zwischenstückes in einer ersten Funktionsstellung,
- Fig. 2: den Gegenstand gemäß Fig. 1 in einer zweiten Funktionsstellung,
- Fig. 3: einen Schnitt durch ein mit einem Zapfventil und einem Tankstutzen verbundenes erfindungsgemäßes Kupplungszwischenstück in der ersten Funktionsstellung,
- Fig. 4: den Gegenstand nach Fig. 3 in der zweiten Funktionsstellung und
- Fig. 5: eine Stirnansicht des Tankstutzenkupplungsendes des Kupplungs- zwischenstückes.

Die Figuren zeigen ein erfindungsgemäßes Kupplungszwischenstück 1 zur Kupplung eines Zapfventils 2 für Flüssiggas an den Tankstutzen 3 eines Tanks für Flüssiggas. Dabei handelt es sich insbesondere um den Tankstutzen 3 bzw. um den Tank eines Kraftfahrzeuges. Das erfindungsgemäße Kupplungszwischenstück 1 weist ein Tankstutzenkupplungsende 4 für die Kupplung an dem Tankstutzen 3 und ein Zapfventilkupplungsende 5 für den Anschluss des Zapfventils 2 auf. In den Figuren ist erkennbar, dass das Kupplungszwischenstück 1 vorzugsweise und im Ausführungsbeispiel aus im Wesentlichen zylinderförmigen Abschnitten aufgebaut ist Insbesondere ist das Tankstutzenkupplungsende 4 zylinderförmig zum Einfassen in einen zylinderförmigen Anschlussflansch 6 des Tankstutzens 3 ausgebildet. Auch das Zapfventilkupplungsende 5 ist bevorzugt im Ausführungsbeispiel im Wesentlichen zylinderförmig zum Aufschieben eines zylinderförmigen Zapfrohres 7 eines Zapfventils 2 ausgebildet.

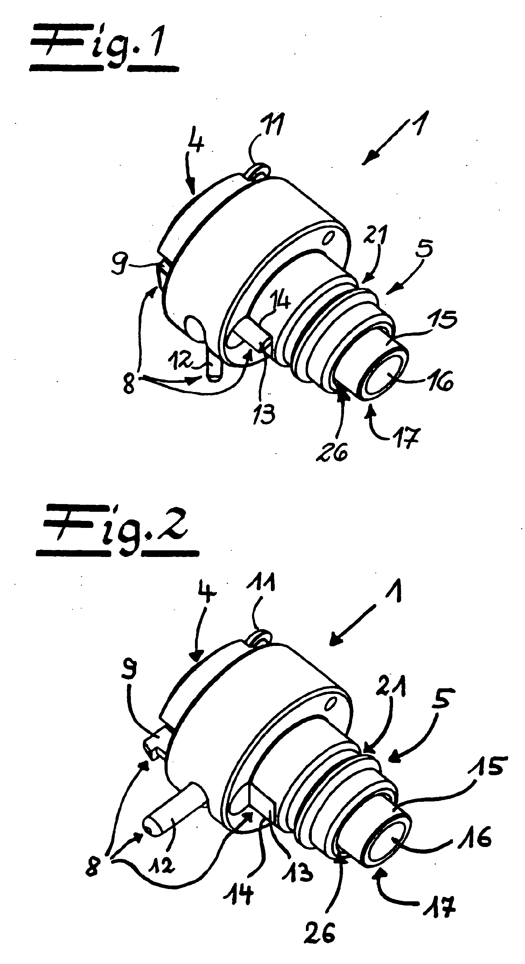

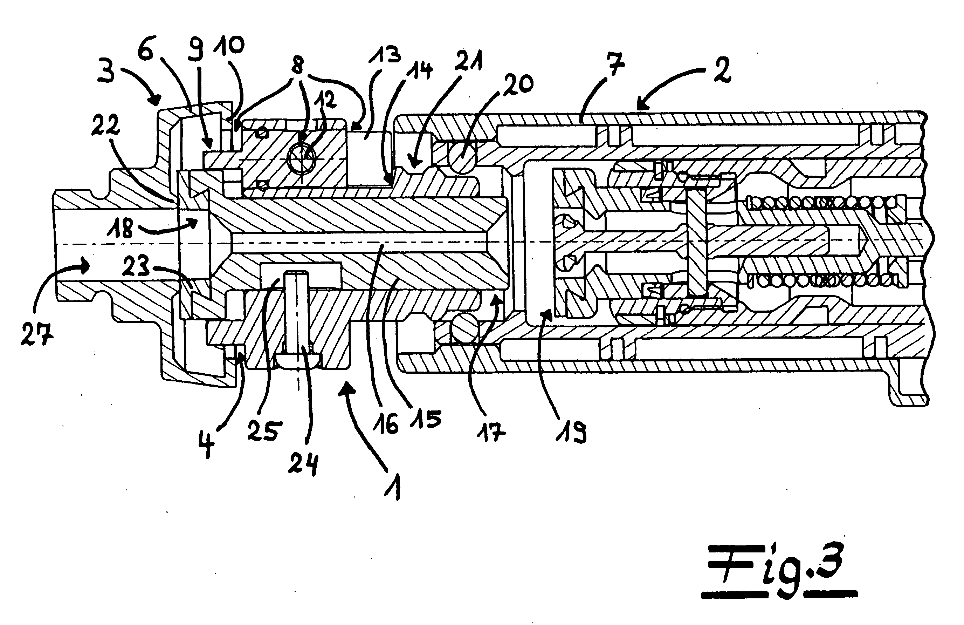

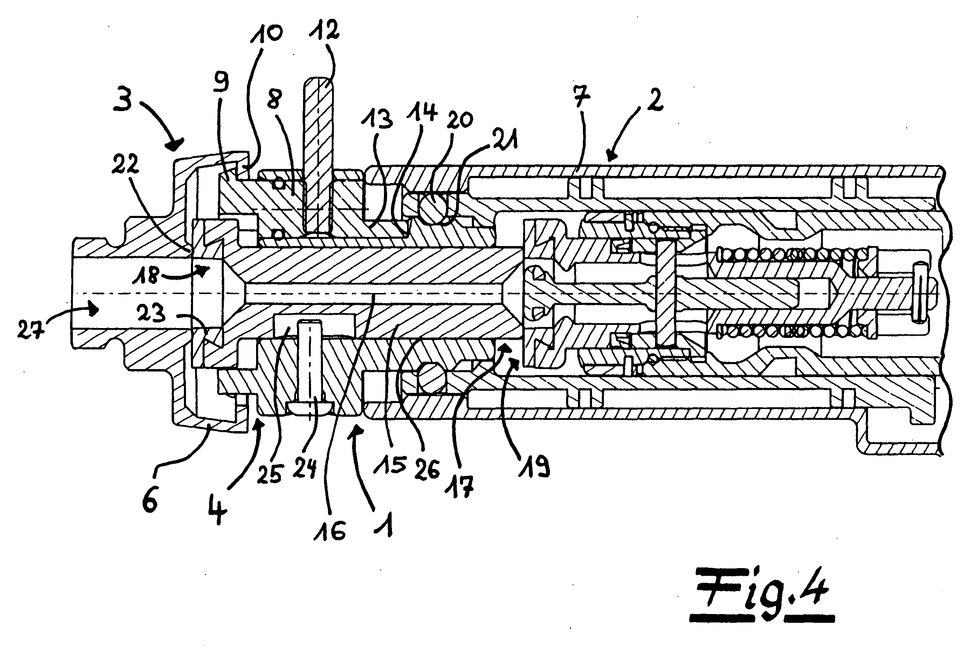

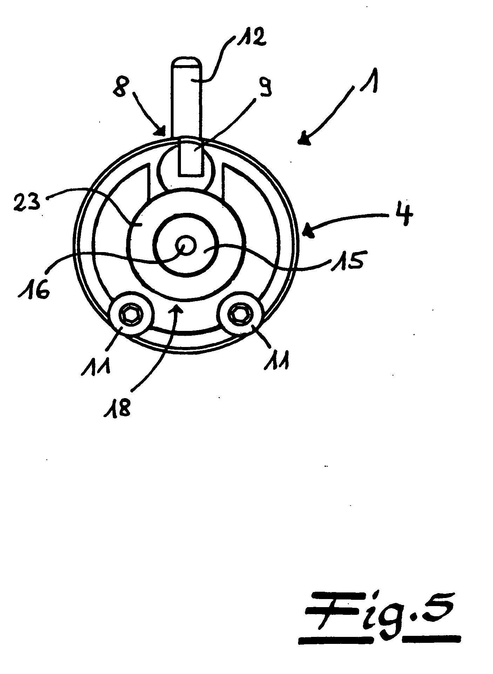

Das Kupplungszwischenstück 1 weist ein Arretierelement 8 zur Arretierung des Tankstutzenkupplungsendes 4 an dem Tankstutzen 3 auf. Das Arretierelement 8 ist von einer Freigabeposition (Fig. 1 und 3) in eine Arretierposition (Fig. 2, 4 und 5) überführbar und umgekehrt. Dieses Arretierelement 8 weist an seinem tankstutzenseitigen Ende eine Arretiemase 9 auf, die in der Freigabeposition (s. beispielsweise Fig. 3) eingeschwenkt ist und in der Arretierposition (s. insbesondere Fig. 2 und 4) ausgeschwenkt, radial nach außen vorsteht. In dem am Tankstutzen 3 arretierten Zustand (Fig. 4) hintergreift die Arretiernase 9 einen Vorsprung des Tankstutzens 3, der vorzugsweise und im Ausführungsbeispiel als über die Innenfläche des zylinderförmigen Anschlussflansches 6 umlaufender Bund 10 ausgebildet ist. Zur Arretierung bzw. Fixierung des Tankstutzenkupplungsendes 4 am Tankstutzen 3 sind vorzugsweise und im Ausführungsbeispiel an der Stirnseite des Tankstutzenkupplungsendes 4 zwei vorkragende Schraubenköpfe 11 als Fixierungselemente vorgesehen (s. insbesondere Fig. 5). Zur Arretierung bzw. Fixierung des Tankstutzenkupplungsendes 4 an dem Tankstutzen 3 wird das Tankstutzenkupplungsende 4 so in den zylinderförmigen Anschlussflansch 6 eingeführt, dass die beiden Schraubenköpfe 11 den umlaufenden Bund 10 des zylinderförmigen Anschlussflansches 6 hintergreifen. Anschließend wird das Arretierelement 8 in die Arretierposition überführt, in der die Arretiernase 9 ebenfalls den umlaufenden Bund 10 hintergreift. Es liegt im Rahmen der Erfindung, dass das Tankstutzenkupplungsende 4 des Kupplungszwischenstückes 1 zunächst auf die beschriebene Weise am Tankstutzen 3 arretiert bzw. fixiert wird, bevor das Zapfventil 2 auf das Zapfventilkupplungsende 5 des Kupplungszwischenstückes 1 aufgeschoben wird.

Das Arretierelement 8 ist im Übrigen zur Überführung von der Freigabeposition in die Arretierposition und umgekehrt um die Längsachse L des Kupplungszwischenstückes 1 schwenkbar. Die Verschwenkung erfolgt im Ausführungsbeispiel über einen Winkel von 90° bzw. etwa 90°. Zum Verschwenken zwischen den beiden Positionen weist das Arretierelement 8 im Ausführungsbeispiel einen Hebel 12 auf, der zweckmäßigerweise und im Ausführungsbeispiel senkrecht bzw. in etwa senkrecht zur Längsachse L ausgerichtet ist. An dem der Arretiemase 9 gegenüberliegenden Ende weist das Arretierelement 8 weiterhin einen Arretierzapfen 13 auf, der in einer Arretierausnehmung 14 am Zapfventilkupplungsende 5 aufgenommen ist. In der Freigabeposition (Fig. 1 und 3) steht dieser Arretierzapfen 13 des Arretierelementes 8 aus der Arretierausnehmung 14 radial nach außen vor. Dadurch bildet der Arretierzapfen 13 einen Anschlag für das Zapfrohr 7 des Zapfventils 2 und dieser Anschlag verhindert, dass das Zapfrohr 7 in seine Ausgabestellung auf das Zapfventilkupplungsende 5 vollständig aufgeschoben werden kann. Dieser Zustand wird insbesondere in der Fig. 3 gezeigt und in diesem Zustand ist (noch) keine Flüssiggasausgabe aus dem Zapfrohr 7 bzw. aus dem Zapfventil 2 möglich. Um eine Flüssiggasausgabe aus dem Zapfrohr 7 zu ermöglichen, muss das Arretierelement 8 in die Arretierposition (Fig. 4) verschwenkt werden, in der die Arretiemase 9 den Bund 10 hintergreift und in der der Arretierzapfen 13 vollständig in der Arretierausnehmung 14 aufgenommen ist und keinen Anschlag mehr für das Zapfrohr 7 bildet In diesem Zustand der Fig. 4 kann das Zapfrohr 7 des Zapfventils 2 vollständig auf das Zapfventilkupplungsende 5 aufgeschoben werden und in diesem Zustand ist eine Flüssiggasausgabe möglich. Bei vollständig auf das Zapfventilkupplungsende 5 aufgeschobenem Zapfventil 2 bzw. Zapfrohr 7 kann das Arretierelement 8 nicht aus der Arretierposition in die Freigabeposition überführt bzw. verschwenkt werden. Dann verhindert das aufgeschobene Zapfrohr 7, dass der Arretierzapfen 13 aus der Arretierausnehmung 14 in die Freigabeposition gelangen kann.

In dem Kupplungszwischenstück 1 ist ein Widerlagerelement vorgesehen, das bevorzugt und im Ausführungsbeispiel als ein axial in Längsrichtung des Kupplungszwischenstückes 1 verschiebbarer Widerlagerkolben 15 ausgebildet ist. Der Widertagerkolben 15 weist im Ausführungsbeispiel einen zentralmittigen Hohlkanal 16 auf, durch den im funktionsfähig gekuppelten Zustand Flüssiggas vom Zapfventilkupplungsende 5 zum Tankstutzenkupplungsende 4 bzw. zum angeschlossenen Tankstutzen 3 strömen kann. Bevorzugt und im Ausführungsbeispiel ist der Widerlagerkolben 15 bezüglich der Längsachse L des Kupplungszwischenstückes 1 länger ausgebildet als das Kupplungszwischenstück 1 bzw. länger ausgebildet als eine im Kupplungszwischenstück 1 vorgesehene, sich in Längsrichtung L erstreckende Kolbenaufnahme 26 für den Widertagerkolben 15. Deshalb kann der Widerlagerkolben 15 - wie beispielsweise in Fig. 3 dargestellt - mit einem zapfventilseitigen Ende 17 aus dem Zapfventilkupplungsende 5 und mit einem tankstutzenseitigen Ende 18 aus dem Tankstutzenkupplungsende 4 vorstehen. Zweckmäßigerweise ist der Widerlagerkolben 15 formschlüssig in der Kolbenaufnahme 26 des Kupplungszwischenstückes 1 aufgenommen. Vorzugsweise und im Ausführungsbeispiel ist sowohl der Widerlagerkolben 15 als auch die Kolbenaufnahme 26 zylinderförmig ausgebildet.

In der Freigabeposition gemäß Fig. 3 verhindert der aus der Arretierausnehmung 14 vorstehende Arretierzapfen 13 das vollständige bzw. funktionsfähige Aufschieben des Zapfrohres 7 auf das Zapfventilkupplungsende 5. Aufgrund des Anliegens des Zapfrohres 7 an dem Arretierzapfen 13 kann ein Kontaktelement 19 des Zapfventils 2 nicht zur Anlage an dem zapfventilseitigen Ende 17 des Widerlagerkolbens 15 kommen. Wenn aber das Arretierelement 8 in die Arretierposition gemäß Fig. 4 überführt wird, kann das Zapfrohr 7 vollständig auf das Zapfventilkupplungsende 5 aufgeschoben werden und die Rastkugeln 20 können in der Nut 21 des Zapfventilkupplungsendes 5 verrasten. Bei diesem Aufschieben des Zapfrohres 7 beaufschlagt das Kontaktelement 19 das zapfventilseitige Ende 17 des Widerlagerkolbens 15 und der Widerlagerkolben 15 wird an ein Widerlager 22 des Tankstutzens 3 angedrückt. Dadurch, dass sich das Kontaktelement 19 des Zapfventils 14 über den Widerlagerkolben 15 an dem Widerlager 22 des Tankstutzens 3 abstützen kann, wird eine Flüssigkeitsausgabe aus dem Zapfventil 2 möglich. Das Flüssiggas strömt also bei Betätigung eines nicht dargestellten Betätigungsgriffes des Zapfventils 2 aus dem Zapfrohr 7 durch den Hohlkanal 16 des Widerlagerkolbens 15 in den Tankstutzen 3. Vorzugsweise und im Ausführungsbeispiel stützt sich der Widerlagerkolben 15 mit einem Dichtungselement 23 an dem Widerlager 22 ab, welches Dichtungselement 23 zweckmäßigerweise den Hohlkanal 16 des Widerlagerkolbens 15 vollständig umgibt. Das Widerlager 22 ist bevorzugt als um die Einfüllöffnung 27 des Tankstutzens 3 umlaufender Widerlagerbund ausgebildet.

Es wurde bereits oben dargelegt, dass zur Realisierung der Kupplung zunächst das Kupplungszwischenstück 1 mit seinem Tankstutzenkupplungsende 4 an dem Tankstutzen 3 arretiert bzw. fixiert wird. Erst nach dieser Arretierung mit Hilfe des Arretierelementes 8 wird dann das Zapfventil 2 vollständig bzw. funktionsfähig auf das Zapfventilkupplungsende 5 aufgeschoben, so dass sich der Zustand gemäß Fig. 4 ergibt und eine Betankung des Tanks über den Tankstutzen 3 mit Flüssiggas möglich ist.

Grundsätzlich könnte man in (noch) nicht an dem Tankstutzen 3 arretiertem Zustand des Kupplungszwischenstückes 1 das Arretierelement 8 in die Arretierposition überführen (Fig. 2) und dann wäre (ohne vorherige Arretierung am Tankstutzen 3) ein vollständiges Aufschieben des Zapfventils 2 auf das Zapfventilkupplungsende 5 des Kupplungszwischenstückes 1 möglich. Dann könnte sich das an dem Widerlagerkolben 15 anliegende Kontaktelement 19 aber aufgrund der axialen Verschiebbarkeit des Widerlagerkolbens 15 aber nicht an einem Widerlager 22 abstützen und eine Ausgabe des Flüssiggases am Zapfventil wäre nicht möglich. Somit werden aufgrund der erfindungsgemäßen Ausgestaltung des Kupplungszwischenstückes 1 Fehlbedienungen effektiv vermieden. - Es sei noch darauf hingewiesen, dass bevorzugt und im Ausführungsbeispiel ein Herausschieben bzw. Herausfallen des Widerlagekolbens 15 aus dem Kupplungszwischenstück 1 mit Hilfe eines am Kupplungszwischenstück 1 fixierten Sicherungselementes 24 vermieden wird, das als Sicherungsschraube oder Sicherungsbolzen ausgebildet sein kann. Dieses Sicherungselement 24 greift in eine Sicherungsausnehmung 25 ein, die in dem Widerlagerkolben 15 vorgesehen ist. Diese Sicherungsausnehmung 25 ist beidseitig in Längsrichtung des Widerlagerkolbens 15 mit Anschlägen für das Sicherungselement 24 versehen.

Im Ausführungsbeispiel dient das Kupplungszwischenstück 1 zur Kupplung eines Tankstutzens 3 mit einer Schnittstelle entsprechend der italienischen Klauenkupplung DISH mit einem Zapfventil 2 mit Euro-Schnittstelle. Durch entsprechende Ausgestaltung des Kupplungszwischenstückes 1 könnten aber auch andere nicht kompatible Kupplungsarten miteinander gekuppelt werden.

## Patentansprüche

1. Kupplungszwischenstück (1) zur Kupplung eines Zapfventils (2) für Flüssiggas an den Tankstutzen (3) eines Tanks für Flüssiggas, insbesondere eines Tanks von Fahrzeugen bzw. Kraftfahrzeugen, wobei das Kupplungszwischenstück (1) ein Tankstutzenkupplungsende (4) und ein Zapfvenilkupplungsende (5) aufweist,
wobei ein Arretierelement (8) zur Arretierung des Tankstutzenkuppfungsendes (4) an dem Tankstutzen (3) vorgesehen ist und wobei das Arretierelement (8) von einer Freigabeposition in eine Arretierposition überführbar ist und umgekehrt, wobei nur bei in der Arretierposition befindlichem Arretierelement (8) das Zapfventil (2) an das Zapfventilkupplungsende (5) anschließbar ist,
wobei ein in dem Kupplungszwischenstück (1) verschiebbares Widerlagerelement vorgesehen ist und wobei bei Anlage bzw. beim Andrücken des Widerlagerelementes an einem Widerlager (22) des Tankstutzens (2) die Flüssiggasausgabe aus einem am Zapfventilkupplungsende (5) angeschlossenen Zapfventil (2) freiggebar ist.

2. Kupplungszwischenstück nach Anspruch 1, wobei das Kupplungszwischenstück (1) aus zylinderförmigen Abschnitten bzw. im Wesentlichen zylinderförmigen Abschnitten aufgebaut ist.

3. Kupplungszwischenstück nach einem der Ansprüche 1 oder 2, wobei das Tankstutzenkupplungsende (4) zylinderförmig zum Einfassen in einen vorzugsweise zylinderförmigen Anschlussflansch (6) des Tankstutzens (3) ausgebildet ist.

4. Kupplungszwischenstück nach einem der Ansprüche 1 bis 3, wobei das Arretierelement (8) tankstutzenseitig eine Arretiernase (9) aufweist, welche Arretiemase (9) in der Arretierposition einen Vorsprung des Tankstutzens (3) hintergreift.

5. Kupplungszwischenstück nach einem der Ansprüche 1 bis 4, wobei das Zapfventilkupplungsende (5) zylinderförmig bzw. im Wesentlichen zylinderförmig zum Aufschieben eines zylinderförmigen Zapfrohres (7) eines Zapfventils (2) ausgebildet ist.

6. Kupplungszwischenstück nach einem der Ansprüche 1 bis 6, wobei das Arretierelement (8) in der Freigabeposition einen Anschlag bildet, der das Anschließen des Zapfventils (2) an das Zapfventilkupplungsende (5) verhindert bzw. blockiert.

7. Kupplungszwischenstück nach Anspruch 6, wobei das Arretierelement (8) einen Arretierzapfen (13) aufweist, der in der Freigabeposition den Anschlag bildet und der in der Arretierposition vollständig in einer Arretierausnehmung (14) aufgenommen ist, so dass das Zapfventil 2 auf das Zapfventilkupplungsende (5) aufschiebbar bzw. vollständig aufschiebbar ist.

8. Kupplungszwischenstück nach einem der Ansprüche 1 bis 7, wobei das Arretierelement (8) von der Arretierposition in die Freigabeposition und umgekehrt um die Längsachse L des Kuppiungszwischenstückes (1) schwenkbar ist.

9. Kupplungszwischenstück nach einem der Ansprüche 1 bis 8, wobei das Widedagerelement als sich in Längsrichtung des Kupplungszwischenstückes (1) erstreckender Widerlagerkolben (15) ausgebildet ist wobei das tankstutzenseitige Ende (18) des Widerlagerkolbens an das Widerlager (22) des Tankstutzens (3) andrückbar ist.

10. Kupplungszwischenstück nach einem der Ansprüche 1 bis 9, wobei das Widerlagerelement bzw. der Widerlagerkolben (15) zumindest einen Hohlkanal (16) aufweist, durch den Flüssiggas vom Zapfventilkupplungsende (5) zum Tankstutzenkupplungsende (4) strömen kann.

11. Kupplungszwischenstück nach einem der Ansprüche 9 oder 10, wobei der Widerlagerkolben (15) mit einem zapfventilseitigen Ende (17) aus dem Zapfventilkupplungsende (5) vorsteht und wobei das zapfventilseitige Ende (17) beim Anschließen des Zapfventils (2) beaufschlagt wird, so dass der Widerlagerkolben an das Widerlager 22 des Tankstutzens 3 andrückbar ist

12. Kupplungszwischenstück nach einem der Ansprüche 9 bis 11, wobei am tankstutzenseitigen Ende (18) des Widerlagerkolbens (15) zumindest ein Dichtungselement (23) angeordnet ist und wobei dieses Dichtungselement (23) zur Anlage an dem Widerlager (22) des Tankstutzens (3) vorgesehen ist.

13. Kupplungszwischenstück nach Anspruch 12, wobei das Dichtungselement (23) das tankstutzenseitige Ende (18) des Hohlkanals (16) umgibt.

14. Kupplungszwischenstück nach einem der Ansprüche 1 bis 13, wobei an dem Tankstutzenkupplungsende (4) zumindest ein Fixierungselement angeordnet ist und wobei das Kupplungszwischenstück (1) mit dem zumindest einen Fixierungselement und mit dem Arettierelement (8) bzw. mit der Arettiemase (9) an dem Tankstutzen (3) fixierbar bzw. arettierbar ist.

## Claims

1. A coupling adapter (1) for purposes of coupling a delivery nozzle (2) for liquefied gas to the tank port (3) of a tank for liquefied gas, in particular a vehicle tank, i.e. a motor vehicle tank, wherein the coupling adapter (1) has a tank port coupling end (4) and a delivery nozzle coupling end (5), wherein
a locking element (8) is provided for purposes of locking the tank port coupling end (4) to the tank port (3), and wherein the locking element (8) can be translated from a released position into a locked position, and vice versa, wherein the delivery nozzle (2) can only be connected to the delivery nozzle coupling end (5) when the locking element (8) is located in the locked position, wherein
a displaceable bearing element is provided in the coupling adapter (1), and wherein the delivery of liquefied gas from a delivery nozzle (2) connected to the delivery nozzle coupling end (5) can be released when the bearing element abuts, i.e. presses, against a bearing surface (22) of the tank port (2).

2. The coupling adapter in accordance with Claim 1, wherein the coupling adapter (1) is constructed from cylindrical sections, or from essentially cylindrical sections.

3. The coupling adapter in accordance with one of the Claims 1 or 2, wherein the tank port coupling end (4) is of cylindrical design for purposes of insertion into a preferably cylindrical connecting flange (6) of the tank port (3).

4. The coupling adapter in accordance with one of the Claims 1 to 3, wherein on the tank port side the locking element (8) has a locking tongue (9), which locking tongue (9) in the locked position engages under a projection of the tank port (3).

5. The coupling adapter in accordance with one of the Claims 1 to 4, wherein the delivery nozzle coupling end (5) is of cylindrical design, or of essentially cylindrical design, for purposes of inserting a cylindrical delivery pipe (7) of a delivery nozzle (2).

6. The coupling adapter in accordance with one of the Claims 1 to 6, wherein in the released position the locking element (8) forms a stop, which prevents i.e. blocks, the connection of the delivery nozzle (2) to the delivery nozzle coupling end (5).

7. The coupling adapter in accordance with Claim 6, wherein the locking element (8) has a locking pin (13), which in the released position forms the stop, and which in the locked position is fully accommodated in a lock recess (14), so that the delivery nozzle (2) can be inserted, i.e. can be fully inserted, into the delivery nozzle end coupling (5).

8. The coupling adapter in accordance with one of the Claims 1 to 7, wherein the locking element (8) can be swivelled about the longitudinal axis L of the coupling adapter (1) from the locked position into the released position, and vice versa.

9. The coupling adapter in accordance with one of the Claims 1 to 8, wherein the bearing element is designed as a bearing piston (15) extending in the longitudinal direction of the coupling adapter (1), wherein the end (18) of the bearing piston on the tank port side can be pressed against the bearing surface (22) of the tank port (3).

10. The coupling adapter in accordance with one of the Claims 1 to 9, wherein the bearing element, i.e. the bearing piston (15), has at least one hollow passage (16), through which liquefied gas can flow from the delivery nozzle coupling end (5) to the tank port coupling end (4).

11. The coupling adapter in accordance with one of the Claims 9 or 10, wherein one end (17) of the bearing piston (15) on the delivery nozzle side projects out of the delivery nozzle coupling end (5), and wherein as the delivery nozzle (2) is connected, the end (17) on the delivery nozzle side is impacted such that the bearing piston can be pressed against the bearing surface (22) of the tank port (3).

12. The coupling adapter in accordance with one of the Claims 9 to 11, wherein at least one sealing element (23) is arranged on the end (18) of the bearing piston (15) on the tank port side, and wherein this sealing element (23) is provided for purposes of abutting against the bearing surface (22) of the tank port (3).

13. The coupling adapter in accordance with Claim 12, wherein the sealing element (23) surrounds the end (18) of the hollow passage (16) on the tank port side.

14. The coupling adapter in accordance with one of the Claims 1 to 13, wherein at least one fixing element is arranged on the tank port coupling end (4), and wherein the coupling adapter (1) can be fixed, i.e. locked to the tank port (3) with the at least one fixing element and with the locking element (8), i.e. with the locking tongue (9).

## Revendications

1. Adaptateur de couplage (1) pour le couplage d'un pistolet de distribution (2) pour du gaz liquide à la tubulure de remplissage (3) d'une citerne de gaz liquide, notamment une citerne de véhicules ou véhicules automobiles, l'adaptateur de couplage (1) présentant un embout de couplage de tubulure de remplissage (4) et un embout de couplage de pistolet de distribution (5),
étant prévu un élément de blocage (8) permettant de bloquer l'embout de couplage de tubulure de remplissage (4) sur la tubulure de remplissage (3) et l'élément de blocage (8) pouvant être passé d'une position de déblocage à une position de blocage et inversement, le pistolet de distribution (2) pouvant être raccordé à l'embout de couplage de pistolet de distribution (5) seulement en position de blocage,
étant prévu un élément d'aboutement déplaçable dans l'adaptateur de couplage (1) et la distribution de liquide par un pistolet de distribution (2) raccordé à l'embout de couplage de pistolet de distribution (5) pouvant être débloquée en cas de contact ou de pression sur l'élément d'aboutement au niveau d'un aboutement (22) de la tubulure de remplissage (2).

2. Adaptateur de couplage selon la revendication 1, l'adaptateur de couplage (1) étant composé de segments cylindriques ou sensiblement cylindriques.

3. Adaptateur de couplage selon une des revendications 1 ou 2, l'embout de couplage de tubulure de remplissage (4) étant réalisé en une forme cylindrique pour l'enchâsser dans une bride de raccordement de préférence de forme cylindrique (6) de la tubulure de remplissage (3).

4. Adaptateur de couplage selon une des revendications 1 à 3, l'élément de blocage (8) présentant au niveau de la tubulure de remplissage un bec de blocage (9), lequel bec de blocage (9), en position de blocage, s'engrène par l'arrière dans une saillie de la tubulure de remplissage (3) en position de blocage.

5. Adaptateur de couplage selon une des revendications 1 à 4, l'embout de couplage de pistolet de distribution (5) étant réalisé en forme cylindrique ou sensiblement cylindrique pour permettre de glisser dessus un tuyau de distribution de forme cylindrique (7) d'un pistolet de distribution (2).

6. Adaptateur de couplage selon une des revendications 1 à 6, l'élément de blocage (8) formant, en position de déblocage, une butée qui empêche ou bloque le raccordement du pistolet de distribution (2) à l'embout de couplage de pistolet de distribution (5).

7. Adaptateur de couplage selon la revendication 6, l'élément de blocage (8) présentant un tourillon de blocage (13) qui, en position de déblocage, forme la butée et qui, en position de blocage, est reçu entièrement dans un évidement de blocage (14), de sorte que le pistolet de distribution (2) peut être glissé, voire totalement glissé, sur l'embout de couplage de pistolet de distribution (5).

8. Adaptateur de couplage selon une des revendications 1 à 7, l'élément de blocage (8) pouvant être pivoté de la position de blocage à la position de déblocage et inversement autour de l'axe longitudinal de l'adaptateur de couplage (1).

9. Adaptateur de couplage selon une des revendications 1 à 8, l'élément d'aboutement étant réalisé sous forme d'un piston d'aboutement (15) s'étendant dans le sens longitudinal de l'adaptateur de couplage (1) et l'extrémité située au niveau de la tubulure de remplissage (18) du piston d'aboutement pouvant être poussée contre l'aboutement (22) de la tubulure de remplissage (3).

10. Adaptateur de couplage selon une des revendications 1 à 9, l'élément d'aboutement ou le piston d'aboutement (15) présentant au moins un canal creux (16) à travers lequel du gaz liquide peut affluer de l'embout de couplage de pistolet de distribution (5) à l'embout de couplage de tubulure de remplissage (4).

11. Adaptateur de couplage selon une des revendications 9 ou 10, le piston d'aboutement (15) dépassant par une extrémité située au niveau du pistolet de distribution (17) de l'embout de couplage de pistolet de distribution (5) et l'extrémité située au niveau du pistolet de distribution (17) étant sollicitée lors du raccordement du pistolet de distribution (2) de manière à ce que le piston d'aboutement puisse être poussé contre l'aboutement (22) de la tubulure de remplissage (3).

12. Adaptateur de couplage selon une des revendications 9 à 11, au moins un élément d'étanchéité (23) étant disposé à l'extrémité située au niveau du pistolet de distribution (8) du piston d'aboutement (15) et cet élément d'étanchéité (23) étant prévu pour venir en contact avec l'aboutement (22) de la tubulure de remplissage (3).

13. Adaptateur de couplage selon la revendication 12, l'élément d'étanchéité (23) entourant l'extrémité située au niveau de la tubulure de remplissage (18) du canal creux (16).

14. Adaptateur de couplage selon une des revendications 1 à 13, au moins un élément de fixation étant disposé au niveau de l'embout de couplage de tubulure de remplissage (4) et l'adaptateur de couplage (1) pouvant être fixé ou bloqué sur la tubulure de remplissage (3) à l'aide de l'au moins un élément de fixation et de l'élément de blocage (8) ou du bec de blocage (9).
